# EUROPEAN PATENT SPECIFICATION

(11) **EP 3 819 085 B1**
(45) Date of publication and mention of the grant of the patent: **02.04.2025**
(21) Application number: 20206925.8
(22) Date of filing: 11.11.2020
(51) Int. Cl.: B25J 9/00

(54) **PARALLEL LINK ROBOT SYSTEM AND PARALLEL LINK ROBOT**
ROBOTERSYSTEM MIT PARALLELVERBINDUNG UND ROBOTER MIT PARALLELVERBINDUNG
SYSTÈME DE ROBOT DE LIAISON PARALLÈLE ET ROBOT DE LIAISON PARALLÈLE

(30) Priority: 11.11.2019 JP 2019204060
(43) Date of publication of application: 12.05.2021
(73) Proprietor: Kabushiki Kaisha Yaskawa Denki, Kitakyushu-shi, Fukuoka 806-0004 (JP)
(72) Inventor: MATSUSHITA, Shigeo, Kitakyushu-shi, Fukuoka 806-0004 (JP); HATANAKA, Takashi, Kitakyushu-shi, Fukuoka 806-0004 (JP)
(74) Representative: Viering, Jentschura & Partner mbB Patent- und Rechtsanwälte

(56) References cited:
- EP-A1- 3 498 430
- EP-A2- 2 546 032
- WO-A1-97/39853
- CN-A- 102 554 916
- DE-A1- 102010 014 647
- DE-A1- 102018 125 953

## Description

### BACKGROUND

### FIELD OF THE INVENTION

The embodiments disclosed herein relate to a parallel link robot system and a parallel link robot.

### DISCUSSION OF THE BACKGROUND

European Patent Application Laid-Open No. 3498430 describes a robot system including a plurality of parallel link robots arranged along a product conveyor and a container conveyor and configured to transfer a product conveyed by the product conveyor to a container conveyed by the container conveyor.

### SUMMARY

According to a first aspect of the present disclosure, a parallel link robot system includes at least one parallel link robot configured to pick a workpiece in a first working region and place the workpiece in a second working region. The at least one parallel link robot includes a base having an axis, a movable portion movable relatively to the base along the axis so as to pick and place the workpiece, and first, second and third arms provided to project outwardly in a radial direction with respect to the axis and arranged around the axis to form a first angle between the first arm and the second arm, a second angle between the second arm and the third arm, and a third angle between the third arm and the first arm. Each of the first, second and third arms connects the base and the movable portion to move the movable portion along the axis. The third angle is less than 120 degrees. The first angle and the second angle are equal to each other. The first arm and the third arm are positioned on a side of the first working region with respect to the axis. The second arm is positioned on a side of the second working region with respect to the axis. According to an eighth aspect of the present disclosure, the at least one parallel link robot includes a belt which is inserted through an opening provided in the base and which is configured to transmit motive power of the motors to the speed reducers, respectively. Thus, the motors and the speed reducers can be separately provided in a simple belt transmission structure. The opening can be reduced in size within a range allowing the belt to penetrate, and can be sealed with each of the motor cases and the corresponding one of the speed reducer cases, in order to keep a preferred hygienic environment of the working regions. The first and second working regions may be particularly part of the parallel link robot system. The first working region may be particularly different from the second working region. For example, the parallel link robot may be, at least partially, positioned between the first working region and the second working region. If there is more than one parallel link robot, a first and a second working regions may be allocated to each of the parallel link robots, so that the number of parallel link robots, the number of first working regions, and the number of second working regions are preferably the same. In such an embodiment, the respective the parallel link robot system may therefore be provided with multiple first working regions and multiple second working regions. Said first working regions may be different form each other and/or may be arranged in a non-overlapping manner. Said second working regions may be different form each other and/or may be arranged in a non-overlapping manner. In an embodiment having multiple parallel link robots and multiple first and second working regions, each of the parallel link robots may be, at least partially, positioned between a respective first working region and a respective second working region.

According to a second aspect of the present disclosure, a parallel link robot includes a base having an axis, a movable portion which is movable relatively to the base along the axis so as to pick a workpiece in a first working region and place the workpiece in a second working region, and first, second and third arms provided to project outwardly in a radial direction with respect to the axis and arranged around the axis to form a first angle between the first arm and the second arm, a second angle between the second arm and the third arm, and a third angle between the third arm and the first arm. Each of the first, second and third arms connects the base and the movable portion to move the movable portion along the axis. The third angle is less than 120 degrees. The first angle and the second angle are equal to each other. The first arm and the third arm are positioned on a side of the first working region with respect to the axis. The second arm is positioned on a side of the second working region with respect to the axis.

The parallel link robot according to the first and second aspects includes the three arms forming the angles including the single angle less than 120 degrees. The parallel link robot can thus be reduced in width in comparison to a case where the three arms are arranged to form equal angles (120 degrees). This leads to reduction in size of and reduction in space for the entire parallel link robot system.

According to a third aspect of the present disclosure, the at least one parallel link robot includes a first and second parallel link robots which are provided such that the second arm of the first parallel link robot and the second arm of the second parallel link robot are parallel. This configuration achieves significant reduction in size in a width direction according to the number of the parallel link robots. In addition, it leads to reduction in size of and reduction in space for the entire parallel link robot system. Furthermore, the plurality of parallel link robots is arrayed in the identical postures. Thus, the parallel link robot system can achieve improvement in reliability of the picking and placing work and reduction in space.

According to a fourth aspect of the present disclosure, the parallel link robot system further includes a first conveying device configured to convey the workpiece along a course including the first working region. The at least one parallel link robot is provided such that the first and third arms are positioned on a side of the first conveying device with respect to the axis. This configuration leads to accurate and stable execution of the picking work that has higher importance and needs higher accuracy in picking work, because the first and third arms having higher rigidity are positioned adjacent to the first working region for the picking work. Thus, the parallel link robot system can achieve improvement in reliability of the picking work and reduction in space.

According to a fifth aspect of the present disclosure, the parallel link robot system further includes a second conveying device configured to convey the workpiece along a course including the second working region. The at least one parallel link robot is provided such that the second arm is positioned on a side of the second conveying device with respect to the axis. Thus, the parallel link robot can posture most appropriately in accordance with accuracy required for the picking work and the placing work, to achieve reliability of the picking and placing work, because the second arm having lower rigidity is positioned adjacent to the second conveying device which needs lower accuracy in comparison to the picking work.

According to a sixth aspect of the present disclosure, the parallel link robot system further includes a camera configured to capture, at a position upstream of the first working region, an image of the workpiece which is conveyed by the first conveying device; an image processor configured to process the image obtained by the camera; and a first operation controller configured to control the at least one parallel link robot in accordance with a result of the image processor. Thus, it is possible to execute the picking work after detection, through image processing, of a position or the like of the workpiece conveyed by the first conveying device. Thus, the picking and placing work can be further improved in reliability along with positioning of the first and third arms having higher rigidity adjacent to the first conveying device. In comparison to a case where the second arm having lower rigidity is positioned adjacent to the first conveying device, this configuration can decrease accuracy necessary for image processing.

According to a seventh aspect of the present disclosure, the at least one parallel link robot includes the three motors provided at the top of the base and configured to drive the first, second, and third arms, respectively, and the three speed reducers provided at the bottom of the base and configured to reduce speed of motive power of the three motors, respectively. This configuration secures maintenance spaces for the motors at the top of the base for facilitation of the maintenance work. Furthermore, there is no need to provide any unnecessary space between the parallel link robots adjacent to each other, avoiding increase in size of the parallel link robot system. Furthermore, the output shaft of each of the speed reducers is positioned at the bottom the base and is thus provided far from the upper end of the robot, for increase in movable range of the movable portion. Moreover, the base needs no large cut-away portion for securement of the movable range of each of upper arm portions, to inhibit dirt or dust on the base from falling to adhere to or mix with the workpiece. This configuration achieves improvement in hygienic environment of the working regions.

According to ninth aspect of the present disclosure, a parallel link robot includes a base having an axis; a movable portion to which an end effector is attachable and which is movable relatively to the base along the axis; first, second and third arms provided to project outwardly in a radial direction with respect to the axis and arranged around the axis, each of the first, second and third arms connecting the base and the movable portion to move the movable portion along the axis; first, second and third motors provided at a top of the base and configured to drive the first, second and third arms, respectively; and first, second and third speed reducers provided at a bottom of the base and configured to reduce speed of motive power of the first, second and third motors, respectively to transmit the reduced motive power to the first, second and third arms, respectively. This configuration secures maintenance spaces for the motors at the top of the base for facilitation of the maintenance work. Furthermore, the output shaft of each of the speed reducers is positioned at the bottom the base and is thus provided far from the upper end of the robot, for increase in movable range of the movable portion. Moreover, the base needs no large cut-away portion for securement of the movable range of each of upper arm portions, to inhibit dirt or dust on the base from falling to adhere to or mix with the workpiece. This configuration achieves improvement in hygienic environment of the working regions.

According to a tenth aspect of the present disclosure, the parallel link robot system further includes a top board provided above the first working region and the second working region and fixedly provided thereon with the three motors configured to drive the first, second, third arms in each of the parallel link robots. The top board also serves as the base of each of the parallel link robots. In this configuration, the top board partitions into a lower space for execution of the picking and placing work and an upper space provided with the motors. Furthermore, this configuration inhibits dirt or dust in the upper space of the top board from falling into the lower space to adhere to or mix with the workpiece, for improvement in hygienic environment of the working regions for the picking and placing work. The top board also serves as the bases of the parallel link robots for inhibition of increase in the number of parts.

According to an eleventh aspect of the present disclosure, the top board is divided correspondingly to each of the parallel link robots, and has a substantially rectangular shape with a long side extending in an extension direction of the second arm and a short side extending in a direction substantially perpendicular to the extension direction. Since the plurality of parallel link robots is arrayed in the width direction to be reduced in width, the bases each having the rectangular shape are combined to have the long sides positioned adjacent to each other so as to be easily directed and positioned for improved workability.

According to a twelfth aspect of the present disclosure, the parallel link robot system further includes a second operation controller configured to control operation of the first, second, and third arms such that the tips of the first, second, and third arms do not come into contact with the top board. Thus, the top board needs no cut-away portion for securement of the movable range of each of the first, second, and third arms, to improve partitioning into the upper space and the lower space by the top board. This configuration achieves further improvement in hygienic environment of the working regions for the picking and placing work.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings.
FIG. 1 is a conceptual diagram depicting an exemplary configuration of a parallel link robot system according to a first embodiment.
FIG. 2 is a perspective view depicting an exemplary configuration of a parallel link robot according to the first embodiment.
FIG. 3 is a top view depicting the exemplary configuration of the parallel link robot according to the first embodiment.
FIG. 4 is a partial sectional view taken along line IV-IV indicated in FIG. 3.
FIG. 5 is a conceptual diagram depicting an exemplary configuration of a parallel link robot system according to a second embodiment.
FIG. 6 is a perspective view depicting an exemplary configuration of a parallel link robot according to the second embodiment.
FIG. 7 is a top view depicting the exemplary configuration of the parallel link robot according to the second embodiment.
FIG. 8 is an explanatory view indicating control of operation of three arms so as to inhibit contact between tips of upper arm portions and a top board.
FIG. 9 is a top view depicting an exemplary configuration of a parallel link robot according to a first modification example, including arms arranged at equal intervals.
FIG. 10 is a top view depicting an exemplary configuration of a parallel link robot according to another modification example, including arms arranged at equal intervals and a top board.
FIG. 11 is a top view depicting an exemplary configuration of a parallel link robot according to a still another modification example, including an arm higher in rigidity than remaining two arms.
FIG. 12 is a block diagram depicting an exemplary hardware configuration of a robot controller.

### DESCRIPTION OF THE EMBODIMENTS

The embodiments will now be described with reference to the accompanying drawings, wherein like reference numerals designate corresponding or identical elements throughout the various drawings.

### 1. FIRST EMBODIMENT

The first embodiment will be described hereinafter with reference to the drawings.

### 1-1. CONFIGURATION OF PARALLEL LINK ROBOT SYSTEM

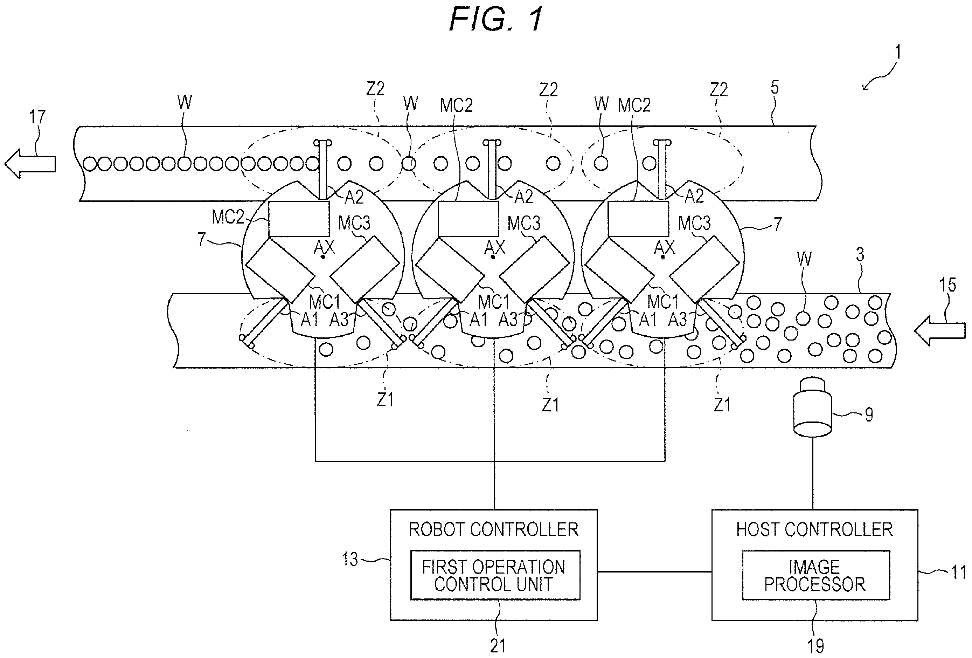

A parallel link robot system 1 according to the present embodiment will initially be described in terms of an exemplary configuration thereof with reference to FIG. 1.

As depicted in FIG. 1, the parallel link robot system 1 includes a first conveyor 3, a second conveyor 5, a plurality of (three as exemplified herein) parallel link robots 7, a camera 9, a host controller 11, and a robot controller 13.

The first conveyor 3 (exemplifying a first conveying device) is configured to convey a workpiece W along a course including first working regions Z1 for the parallel link robots 7. The first conveyor 3 conveys the workpiece W toward the first working regions Z1 in a direction indicated by an arrow 15. In each of the first working regions Z1, a corresponding one of the parallel link robots 7 picks (also expressed as grips, sucks, holds, extracts, lifts, or the like) the workpiece W.

The second conveyor 5 (exemplifying a second conveying device) is configured to convey a workpiece W along a course including second working regions Z2 for the parallel link robots 7. The second conveyor 5 conveys the workpiece W from the second working regions Z2 in a direction indicated by an arrow 17. In each of the second working regions Z2, a corresponding one of the parallel link robots 7 places (also expressed as mounts, lays, unloads, or the like) the workpiece W. The first conveyor 3 and the second conveyor 5 are arranged to have conveying directions substantially parallel and identical to each other (i.e. the arrows 15 and 17 are identically directed). The first conveyor 3 and the second conveyor 5 may alternatively be arranged to have the conveying directions opposite to each other.

The workpiece W should not be particularly limited as long as the workpiece W can be picked and placed by the parallel link robots 7. Examples of the workpiece W include machine parts, electrical parts, products, commercial products, and food products.

The first conveyor 3 and the second conveyor 5 should not be particularly limited as long as the first conveyor 3 and the second conveyor 5 are configured to convey the workpiece W. Applicable examples of the first conveyor 3 and the second conveyor 5 include a belt conveyor, a roller conveyor, and a chain conveyor. The applicable examples thereof also include conveying devices other than a conveyor, such as an automated guided vehicle (AGV), a bogie, a cargo car, and a chute.

The parallel link robots 7 are each supported on a platform (not depicted) so as to be positioned above the first conveyor 3 and the second conveyor 5. Each of the parallel link robots 7 picks the workpiece W in the corresponding first working region Z1 and places the workpiece W in the corresponding second working region Z2. FIG. 1 exemplarily depicts a case of picking a large number of workpieces W conveyed at random positions by the first conveyor 3, and placing the workpieces W on the second conveyor 5 so as to be arrayed in a line. Picking and placing work should not be limited to this exemplification in terms of a manner thereof. Examples of the manner include picking the workpiece W accommodated in a container conveyed by the first conveyor 3 and placing the picked workpiece W at a predetermined site in a container conveyed by the second conveyor 5 (i.e. encasing).

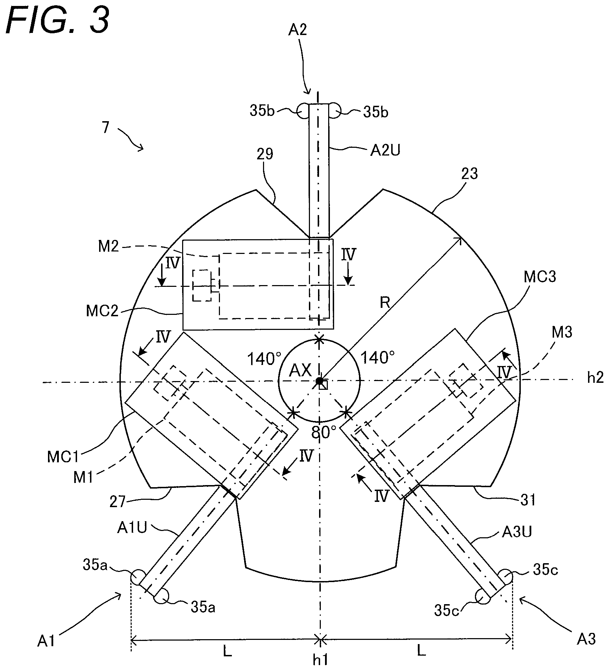

The parallel link robots 7 each include three arms (examples of a first arm, a second arm, and a third arm) A1 to A3. As to be described in detail later, the arms A1 to A3 are provided such that the arms A1 and A3 form a circumferential angle having 80 degrees around a center axis (an axis) AX and the arms A1 and A2 and the arms A2 and A3 each form a circumferential angle having 140 degrees (see FIG. 3). The parallel link robots 7 are each arranged such that the two arms A1 and A3 positioned at respective ends of the angle having 80 degrees is positioned adjacent to the first working region Z1 (i.e. adjacent to the first conveyor 3) with respect to the center axis AX, and the remaining arm A2 is positioned adjacent to the second working region Z2 (i.e. adjacent to the second conveyor 5) with respect to the center axis AX. Specifically, the arm A2 extends perpendicularly to the conveying directions of the workpiece W by the conveyors 3 and 5, and the arms are arranged at the positions described above. The three parallel link robots 7 posturing (directed) as described above are arrayed in a direction perpendicular to an extension direction of the arm A2 (i.e. the conveying directions of the workpiece W by the conveyors 3 and 5).

The number of the parallel link robots 7 may be set appropriately to have a number other than three (e.g. two or at least four) in accordance with processing performance of the parallel link robots 7, the number of the workpieces W to be conveyed, or the like. If the single parallel link robot 7 is configured to process all the workpieces W, the number may be set to one instead of a plural number. The arm A2 in each of the parallel link robots 7 may not necessarily extend perpendicularly to the conveying directions of the workpieces W and may be slant appropriately, if the arms A1 and A3 are positioned adjacent to the first working region Z1 with respect to the center axis AX and the arm A2 is positioned adjacent to the second working region Z2 with respect to the center axis AX.

The camera 9 images the workpiece W conveyed by the first conveyor 3 at a position upstream of the first working region Z1, specifically, upstream of the first working region Z1 of the most upstream one of the parallel link robots 7.

The host controller 11 is constituted by a motion controller, a personal computer (PC), a programmable logic controller (PLC), or the like. The host controller 11 includes an image processor 19. The image processor 19 acquires an image of the workpieces W imaged by the camera 9 and applies predetermined image analysis processing to obtain information on at least some of the number, positions, postures (directions), shapes, sizes, types, and the like of the workpieces W.

The robot controller 13 is constituted by a motion controller, a personal computer (PC), a programmable logic controller (PLC), a servo amplifier, or the like. The robot controller 13 includes a first operation control unit (a first operation controller) 21. The first operation control unit 21 controls the parallel link robots 7 in accordance with a result of the image processing by the image processor 19. Specifically, the first operation control unit 21 calculates motor position commands to motors M1 to M3 in order to shift a hand tip of each of the parallel link robots 7 to a position to pick the workpiece W in accordance with the information received from the image processor 19 in the host controller 11, and controls drive electric power to be supplied to the motors M1 to M3 in accordance with the motor position commands to control picking operation of the parallel link robot 7. The first operation control unit 21 also calculates motor position commands to the motors M1 to M3 in order to shift the hand tip of each of the parallel link robots 7 to a position to place the workpiece W, and controls drive electric power to be supplied to the motors M1 to M3 in accordance with the motor position commands to control placing operation of the parallel link robot 7.

The robot controller 13 may be constituted by a single control device or a plurality of control devices. In a first case where the robot controller 13 includes the single control device, the single robot controller 13 may integrally control the three parallel link robots 7. In a second case where the robot controller 13 includes the plurality of control devices, three robot controllers 13 may respectively control the parallel link robots 7. The robot controller 13 and the host controller 11 may not be separately provided to be constituted by an integral control device. The host controller 11 may be constituted by a plurality of control devices.

The present embodiment exemplarily describes picking the workpiece W at the first conveyor 3 and placing the workpiece W at the second conveyor 5. The workpiece W may alternatively be picked or placed in a working region out of any one of the conveyors. For example, the workpiece W picked at a conveyor may be placed at a table, a conveying device other than a conveyor, a processing device configured to apply predetermined processing, or the like (exemplifying the second working region). The workpiece W picked at a table, a conveying device other than a conveyor, a predetermined processing device or the like (exemplifying the first working region) may be placed at a conveyor. Still alternatively, the workpiece W picked at a table, a conveying device other than a conveyor, a predetermined processing device, or the like may be placed at a table, a conveying device other than a conveyor, a predetermined processing device, or the like.

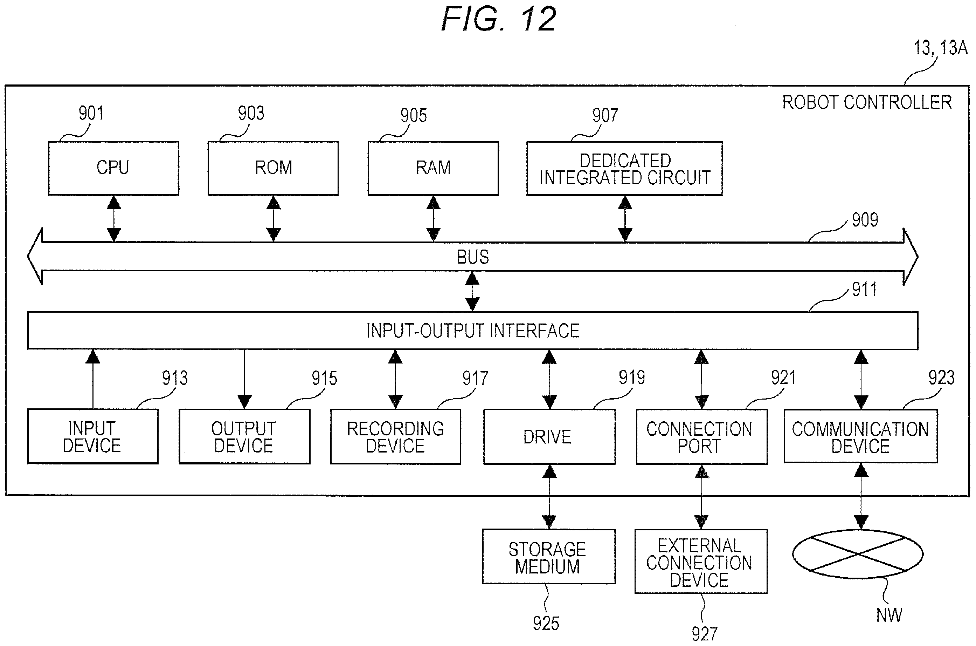

The processing executed by the image processor 19, the first operation control unit 21, or the like should not be limitedly assigned as exemplified above, and any smaller number of processors (e.g. a single processor) may execute the processing or further segmented processors may execute the processing. The robot controller 13 may have a part (e.g. an inverter) configured to supply the motors M1 to M3 with drive electric power and implemented by an actual device, and remaining functions of the robot controller 13 may be implemented by programs executed by a CPU 901 (see FIG. 12) to be described later or may partially or entirely be implemented by actual devices such as an ASIC, an FPGA, or any other electric circuit.

### 1-2. CONFIGURATION OF PARALLEL LINK ROBOT

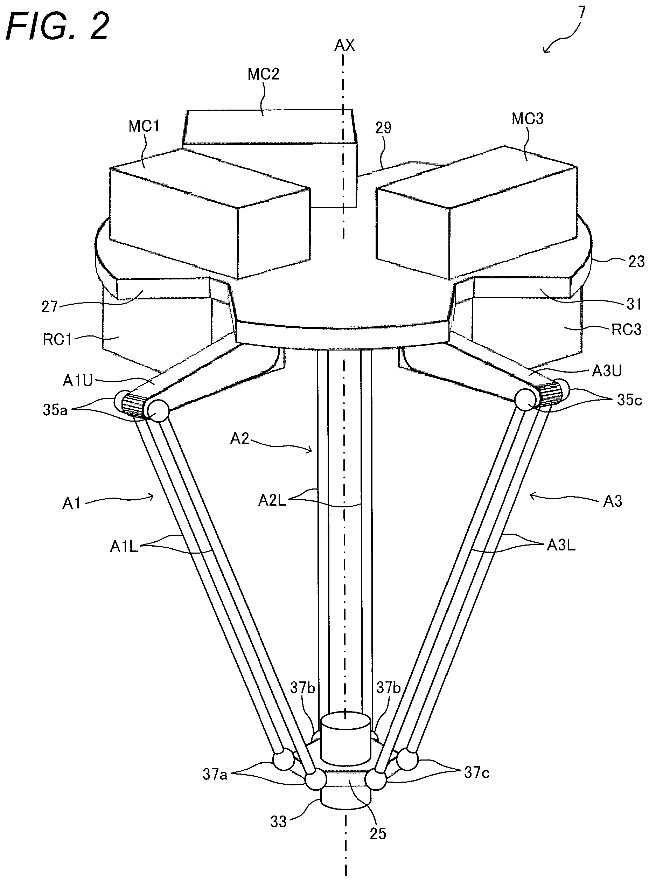

The parallel link robot 7 according to the present embodiment will be described next in terms of an exemplary configuration thereof with reference to FIG. 2 and FIG. 3.

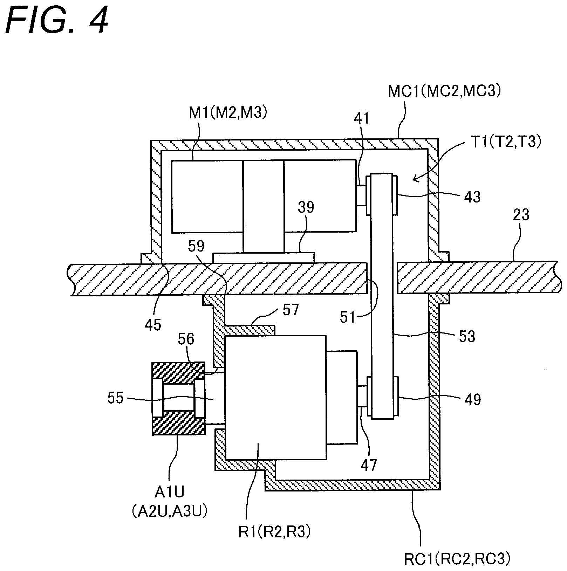

As depicted in FIG. 2, the parallel link robot 7 includes a base 23, a movable portion 25, the three arms A1 to A3, and the three motors M1 to M3. The motors M1 to M3 are accommodated in motor cases MC1 to MC3, respectively (see FIG. 4). FIG. 1 and FIG. 2 depict the motor cases MC1 to MC3.

The three arms A1 to A3 are arranged to have predetermined circumferential angles around the center axis AX of the parallel link robot 7, and couples the base 23 and the movable portion 25. The three motors M1 to M3 are arranged at the top of the base 23 and are configured to drive the arms A1 to A3, respectively. The base 23 exemplarily has a substantially circular plate shape herein, and has cut-away portions 27, 29, and 31 positioned correspondingly to the arms A1 to A3 and each having a substantially trapezoidal shape. These cut-away portions 27, 29, and 31 secure swingable height, to a range above the base 23, of tips of upper arm portions A1U to A3U in the arms A1 to A3, to enlarge a movable range of the movable portion 25. The base 23 should not be limited to such a circular shape and may alternatively have a polygonal shape such as a triangular, quadrilateral, pentagonal, hexagonal, or a star shape. The base 23 may alternatively be shaped asymmetrically about the center axis AX. The cut-away portions 27, 29, and 31 should not be limited to the trapezoidal shape and may alternatively have a triangular shape, a quadrilateral shape, an arc shape, or the like.

The base 23 is provided, at the bottom, with three speed reducers R1 to R3 configured to reduce speed of motive power generated by the three motors M1 to M3 and transmit the motive power thus obtained to the three arms A1 to A3, respectively. The speed reducers R1 to R3 are accommodated in speed reducer cases RC1 to RC3, respectively (see FIG. 4). FIG. 2 depicts the speed reducer cases RC1 and RC3. The movable portion 25 exemplarily has a hexagonal shape herein, and has a lower end provided with an attachment 33. The attachment 33 couples an end effector (not depicted), such as a robot hand or a suction pad, configured to pick and place the workpiece W. The movable portion 25 should not be limited to such a hexagonal shape and may alternatively have a triangular, quadrilateral, or any other polygonal shape, a circular shape, or the like.

The three arms A1 to A3 are configured similarly to one another. The arms A1 to A3 have the upper arm portions A1U to A3U (exemplifying arm portions) rotatably coupled to the base 23, respectively. Specifically, the arm A1 includes the upper arm portion A1U coupled to the speed reducer R1, and two lower arm portions A1L coupled to the upper arm portion A1U and the movable portion 25. The two lower arm portions A1L are coupled to the upper arm portion A1U via spherical bearings 35a and are coupled to the movable portion 25 via spherical bearings 37a. The arm A2 includes the upper arm portion A2U coupled to the speed reducer R2, and two lower arm portions A2L coupled to the upper arm portion A2U and the movable portion 25. The two lower arm portions A2L are coupled to the upper arm portion A2U via spherical bearings 35b and are coupled to the movable portion 25 via spherical bearings 37b. The arm A3 includes the upper arm portion A3U coupled to the speed reducer R3, and two lower arm portions A3L coupled to the upper arm portion A3U and the movable portion 25. The two lower arm portions A3L are coupled to the upper arm portion A3U via spherical bearings 35c and are coupled to the movable portion 25 via spherical bearings 37c.

As depicted in FIG. 3, the upper arm portions A1U to A3U are linear members and extend radially from the center axis AX. The arms A1 to A3 are arranged such that the upper arm portions A1U to A3U form circumferential angles around the center axis AX, including an angle less than 120 degrees and remaining two angles equal to each other. The arms A1 to A3 are thus arranged to form a substantially Y shape when viewed along the center axis AX. The present embodiment exemplifies a case where the arms A1 and A2 form the angle having 140 degrees, the arms A2 and A3 form the angle also having 140 degrees, and the arms A3 and A1 form the angle having 80 degrees.

The motors M1 to M3 (the motor cases MC1 to MC3) are arranged most appropriately in accordance with these angles. Specifically, the motors M2 and M3 (the motor cases MC2 and MC3) are arranged at first circumferential ends of the corresponding arms A2 and A3 whereas the motor M1 (the motor case MC1) is arranged at a second circumferential end of the corresponding arm A1. Accordingly, the arms A2 and A3 interpose the single motor M3 (the motor case MC3), the arms A1 and A2 interpose the two motors M1 and M2 (the motor cases MC1 and MC2), and the arms A1 and A3 forming the small angle interpose no motor. In a case where the motors M1 to M3 can be arranged on the base 23 in a manner different from this most appropriate manner, all the motors M1 to M3 (the motor cases MC1 to MC3) may be arranged to be directed identically at either the first or second circumferential ends of the arms A1 to A3.

The angle less than 120 degrees should not be limited to 80 degrees. The angle has only to be set such that an extending size L, from the center axis AX, of the arms A1 and A3 in a width direction h2 perpendicular to an extension direction h1 of the arm A2 is substantially equal to an extending size, from the center axis AX, of the base 23 in the width direction h2 (exemplified by a radius R of the base 23 herein) (e.g. 110, 90, or 70 degrees). This configuration inhibits decrease in balance of loads to the arms A1 to A3 and increase in size of the movable portion 25, as well as achieves decrease in width of the parallel link robot 7 (a size in the width direction h2).

The spherical bearings 35a to 35c and the spherical bearings 37a to 37c are not limited to spherical joints, and examples thereof include rotary joints, universal joints, and prismatic joints. Each of the arms A1 to A3 is not limited to a link mechanism including the two arm portions, and may alternatively be constituted by a link mechanism including three or more arm portions.

### 1-3. POWER TRANSMISSION MECHANISM CONFIGURED TO TRANSMIT MOTIVE POWER OF MOTOR TO SPEED REDUCER

Described next with reference to FIG. 4 is an exemplary configuration of power transmission mechanisms T1 to T3 configured to transmit motive power of the motors M1 to M3 to the speed reducers R1 to R3, respectively. FIG. 4 is a partial sectional view taken along line IV-IV indicated in FIG. 3. The power transmission mechanisms T1 to T3 are configured similarly to one another, and description is made herein to the power transmission mechanism T1 configured to transmit motive power of the motor M1 to the speed reducer R1.

As depicted in FIG. 4, the motor M1 configured to drive the upper arm portion A1U in the arm A1 is fixed to the top of the base 23 by means of a support member 39. The motor M1 is of a rotary type and includes a shaft 41 provided with a driving pulley 43. The motor M1, the support member 39, the shaft 41, the driving pulley 43, and the like are accommodated in and covered with the motor case MC1. The motor case MC1 exemplarily has a substantially rectangular parallelepiped shape, and has a lower opening 45. The motor case MC1 is fixed to the top of the base 23 by means of a bolt (not depicted) or the like such that the opening 45 is closed by the base 23.

The base 23 is provided, at the bottom, with the speed reducer R1 configured to reduce speed of motive power of the motor M1 and transmit the motive power thus obtained to the upper arm portion A1U in the arm A1. The speed reducer R1 includes an input shaft 47 provided with a driven pulley 49. The driving pulley 43 of the motor M1 and the driven pulley 49 of the speed reducer R1 are provided with a winding endless belt 53 inserted through an opening 51 at the base 23 such that motive power of the motor M1 is transmitted to the speed reducer R1. The opening 51 is sized to enable penetration of the belt 53, and allows communication between an internal space of the motor case MC1 and an internal space of the speed reducer case RC1. The speed reducer R1 includes an output shaft 55 provided opposite to the input shaft 47 and coupled to a base end of the upper arm portion A1U. The speed reducer R1, the input shaft 47, the driven pulley 49, and the like are accommodated in and covered with the speed reducer case RC1. The output shaft 55 penetrates an opening 56 of the speed reducer case RC1 to project outward. The speed reducer case RC1 has a support 57 fixing the speed reducer R1. The speed reducer case RC1 exemplarily has a substantially rectangular parallelepiped shape, and has an upper opening 59. The speed reducer case RC1 is fixed to the bottom of the base 23 by means of a bolt (not depicted) or the like such that the opening 59 is closed by the base 23.

This configuration allows motive power of the motor M1 to be reduced in rotational speed and increased in torque by the speed reducer R1 and be transmitted to the upper arm portion A1U in the arm A1. The power transmission mechanism T2 configured to transmit motive power of the motor M2 to the speed reducer R2 and the power transmission mechanism T3 configured to transmit motive power of the motor M3 to the speed reducer R3 are configured similarly to the power transmission mechanism T1.

The speed reducer case RC1 also serve as a support member for the speed reducer R1 in the above configuration. Alternatively, a separate support member may be provided in addition to the speed reducer case RC1 similarly to the motor M1. The motor M1 may alternatively be supported by the motor case MC1 similarly to the speed reducer R1.

### 1-4. EFFECTS OF FIRST EMBODIMENT

As described above, the parallel link robot system 1 according to the present embodiment includes the at least one parallel link robot 7 configured to pick the workpiece W in the first working region Z1 and place the workpiece W in the second working region Z2. The parallel link robot 7 includes the base 23, the movable portion 25 provided with the end effector, and the three arms A1 to A3 including the upper arm portions A1U to A3U rotatably coupled to the base 23, respectively, coupling the base 23 and the movable portion 25, and arranged such that the upper arm portions A1U to A3U form the circumferential angles around the center axis AX including the single angle less than 120 degrees and the two remaining angles equal to each other. The two arms A1 and A3 positioned at the respective ends of the angle less than 120 degrees are positioned adjacent to the first working region Z1 with respect to the center axis AX, and the remaining arm A2 is positioned adjacent to the second working region Z2 with respect to the center axis AX.

The parallel link robot 7 according to the present embodiment includes the three arms A1 to A3 forming the angles including the single angle less than 120 degrees. The parallel link robot 7 can thus be reduced in width (the size in the width direction h2) in comparison to a case where the three arms A1 to A3 are arranged to form equal angles (120 degrees). This leads to reduction in size of and reduction in space for the entire parallel link robot system 1.

However, the parallel link robot 7 configured as described above problematically has higher rigidity of the two arms A1 and A3 positioned at the respective ends of the angle less than 120 degrees and lower rigidity of the remaining arm A2. When the movable portion 25 is shifted toward the single arm A2 having lower rigidity, vibration or movement may cause positional displacement.

The picking and placing work needs picking the workpiece W without any fault, and is preferred to achieve higher accuracy for picking work rather than placing work. In view of this, in the parallel link robot system 1 according to the present embodiment, the parallel link robot 7 is provided such that the two arms A1 and A3 having higher rigidity are positioned adjacent to the first working region Z1 for the picking work, and the single arm Z2 having lower rigidity is positioned adjacent to the second working region Z2 for the placing work. Such arrangement leads to accurate and stable execution of the picking work that has higher importance and needs higher accuracy in the picking and placing work. The parallel link robot system 1 thus obtained can achieve improvement in reliability of the picking and placing work and reduction in space.

Particularly, the at least one parallel link robot 7 according to the present embodiment includes a plurality of (three) parallel link robots. Each of the parallel link robots 7 postures such that the two arms A1 and A3 are positioned adjacent to the first working region Z1 with respect to the center axis AX and the remaining arm A2 is positioned adjacent to the second working region Z2 with respect to the center axis AX, and the parallel link robots 7 are arrayed in the width direction h2 perpendicular to the extension direction h1 of the remaining arm A2.

The plurality of parallel link robots 7 according to the present embodiment is arrayed in the width direction h2 perpendicular to the extension direction h1 of the arms A2, achieving significant reduction in size in the width direction h2 according to the number of the parallel link robots. This leads to reduction in size of and reduction in space for the entire parallel link robot system 1.

The plurality of parallel link robots 7 is arrayed in the identical postures. In comparison to a case where the parallel link robots 7 are arrayed alternately in different postures (e.g. a robot including the arms A1 and A3 positioned adjacent to the first working region Z1 with respect to the center axis AX and the arm A2 positioned adjacent to the second working region Z2 with respect to the center axis AX and a robot including the arms A1 and A3 positioned adjacent to the second working region Z2 with respect to the center axis AX and the arm A2 positioned adjacent to the first working region Z1 with respect to the center axis AX are arrayed alternately), the two arms A1 and A3 having higher rigidity can be arranged adjacent to the first working region Z1 for the picking work in each of the robots. The parallel link robot system 1 thus obtained can achieve improvement in reliability of the picking and placing work and reduction in space.

Particularly, the parallel link robot system 1 according to the present embodiment further includes the first conveyor 3 configured to convey the workpiece W along the course including first working region Z1, and the parallel link robot 7 is provided such that the two arms A1 and A3 are positioned adjacent to the first conveyor 3 with respect to the center axis AX.

In a case where the workpiece W is picked at the first conveyor 3 and is placed at a different site, the end effector needs to follow the workpiece W being conveyed to pick the workpiece W and thus needs to execute the picking work highly accurately. The parallel link robot 7 according to the present embodiment is provided such that the two arms A1 and A3 having higher rigidity are positioned adjacent to the first conveyor 3. This configuration achieves accuracy and stability of the work of picking the workpiece W being conveyed by the first conveyor 3.

Particularly, the parallel link robot system 1 according to the present embodiment further includes the second conveyor 5 configured to convey the workpiece W along the course including the second working region Z2, and the parallel link robot 7 is provided such that the remaining arm A2 is positioned adjacent to the second conveyor 5 with respect to the center axis AX.

In a case where the workpiece W is picked at the first conveyor 3 and is placed at the second conveyor 5, the picking work at the first conveyor 3 needs high accuracy as described above whereas the placing work at the second conveyor 5 often needs lower accuracy in comparison to the picking work. The parallel link robot 7 according to the present embodiment is provided such that the two arms A1 and A3 having higher rigidity are positioned adjacent to the first conveyor 3 and the single arm A2 having lower rigidity is positioned adjacent to the second conveyor 5. The parallel link robot 7 can thus posture most appropriately in accordance with accuracy required for the picking work and the placing work, to achieve reliability of the picking and placing work.

Particularly, the parallel link robot system 1 according to the present embodiment further includes the camera 9 configured to image the workpiece W conveyed by the first conveyor 3 at a position upstream of the first working region Z1, the image processor 19 configured to process an image obtained by the camera 9, and the first operation control unit 21 configured to control the parallel link robot 7 in accordance with an image processing result.

The present embodiment achieves execution of the picking work after detection, through image processing, of a position or the like of the workpiece W conveyed by the first conveyor 3. The picking and placing work can thus be further improved in reliability along with positioning of the two arms A1 and A3 having higher rigidity adjacent to the first conveyor 3. In comparison to a case where the single arm A2 having lower rigidity is positioned adjacent to the first conveyor 3, this configuration can decrease accuracy necessary for image processing.

Particularly, the parallel link robot 7 according to the present embodiment includes the three motors M1 to M3 provided at the top of the base 23 and configured to drive the three arms A1 to A3, respectively, and the three speed reducers R1 to R3 provided at the bottom of the base 23 and configured to reduce speed of motive power of the three motors M1 to M3 and transmit the motive power thus obtained to the three arms A1 to A3, respectively.

In a case where both a motor and a speed reducer directly connected to each other are provided at the bottom of the base 23, maintenance work such as replacement of the motor needs a predetermined space behind the motor. The maintenance work is thus difficult if the parallel link robots 7 have a small space therebetween. In contrast, if the parallel link robots 7 have a sufficient space therebetween for facilitation of the maintenance work, the parallel link robot system 1 is increased in size with such an unnecessary space.

In a case where both the motor and the speed reducer directly connected to each other are provided at the top of the base 23, the upper arm portions A1U to A3U each have a rotation axis positioned at the top of the base 23 and thus provided adjacent to an upper end of the robot. This configuration limits swingable height of the upper arm portions A1U to A3U and limits the movable range of the movable portion 25. In this case, the base 23 is provided with a large cut-away portion (e.g. a cut-away portion extending from an outer circumference of the base 23 to a position adjacent to the rotation axis of the upper arm portion) in order to secure a movable region of each of the upper arm portions A1U to A3U. The base 23 is provided thereon with dirt or dust that may fall through the cut-away portion and adhere to or mix with the workpiece W. Particularly if the workpiece W is a food product or the like, such a phenomenon is not preferred hygienically.

According to the present embodiment, the motors M1 to M3 and the speed reducers R1 to R3 are separated from each other such that the motors M1 to M3 are provided at the top of the base 23 and the speed reducers R1 to R3 are provided at the bottom of the base 23. This configuration secures maintenance spaces for the motors M1 to M3 at the top of the base 23 for facilitation of the maintenance work. Furthermore, there is no need to provide any unnecessary space between the parallel link robots 7 adjacent to each other, avoiding increase in size of the parallel link robot system 1. The rotation axis of each of the upper arm portions A1U to A3U (the output shaft 55 of each of the speed reducers R1 to R3) is positioned at the bottom the base 23 and is thus provided far from the upper end of the robot, for increase in swingable height of each of the upper arm portions A1U to A3U and increase in movable range of the movable portion 25. Moreover, the base 23 needs no large cut-away portion for securement of the movable range of each of the upper arm portions A1U to A3U, to inhibit dirt or dust on the base 23 from falling to adhere to or mix with the workpiece W. This configuration achieves improvement in hygienic environment of the working regions.

Particularly, the parallel link robot 7 according to the present embodiment includes the belt 53 inserted through the opening 51 provided in the base 23 and configured to transmit motive power of each of the motors M1 to M3 to the corresponding one of the speed reducers R1 to R3.

The motors M1 to M3 and the speed reducers R1 to R3 can thus be separately provided in a simple belt transmission structure. The opening 51 can be reduced in size within a range allowing the belt 53 to penetrate, and can be sealed with each of the motor cases MC1 to MC3 and the corresponding one of the speed reducer cases RC1 to RC3, in order to keep a preferred hygienic environment of the working regions.

### 2. SECOND EMBODIMENT

The second embodiment will be described below with reference to the drawings.

### 2-1. CONFIGURATION OF PARALLEL LINK ROBOT SYSTEM

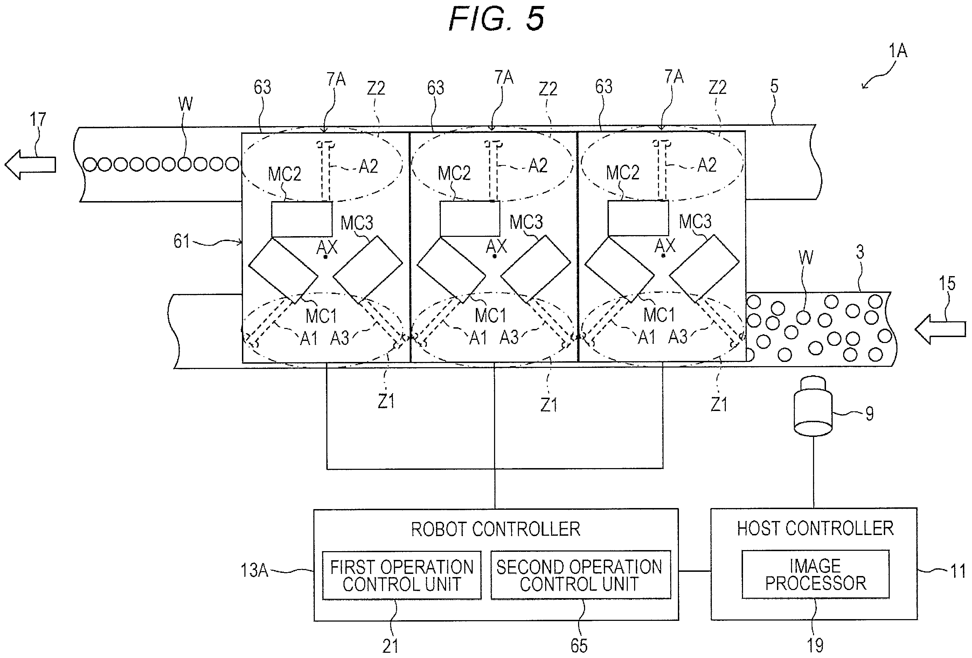

A parallel link robot system 1A according to the present embodiment will initially be described in terms of an exemplary configuration thereof with reference to FIG. 5.

As depicted in FIG. 5, the parallel link robot system 1A includes a top board 61 provided above the first working region Z1 and the second working region Z2 and fixedly provided thereon with the three motors M1 to M3 configured to drive the three arms A1 to A3 in each parallel link robot 7A. The top board 61 is divided correspondingly to each of the parallel link robots 7A, and serves also as bases 63 of the parallel link robots 7A. In other words, the three bases 63 are arrayed in one direction to constitute the single top board 61. The bases 63 each have a substantially rectangular shape with a long side extending in the extension direction h1 of the arm A2 and a short side extending in the width direction h2 (the conveying directions of the workpiece W) substantially perpendicular to the extension direction. The long side of each of the bases 63 is sized to extend from a position adjacent to an outer end of the first conveyor 3 to an outer end of the second conveyor 5. The base 63 is sized to cover the movable range of the movable portion 25, including the first working region Z1 and the second working region Z2 of each of the parallel link robots 7A.

A plurality of (three as exemplified herein) parallel link robots 7A is arrayed on a platform (not depicted) such that the long sides of the adjacent bases 63 are in contact with each other without any gap therebetween. The parallel link robots 7A have only to be arrayed such that the long sides of the adjacent bases 63 face each other, and the long sides of the bases 63 may alternatively interpose any other member (e.g. a beam of the platform).

A robot controller 13A includes, in addition to the first operation control unit 21, a second operation control unit (a second operation controller) 65. The second operation control unit 65 controls operation of the three arms A1 to A3 in each of the parallel link robots 7A such that the tips of the upper arm portions A1U to A3U do not come into contact with the top board 61 (the base 63).

Similarly to the first embodiment, each of the parallel link robots 7A picks the workpiece W conveyed by the first conveyor 3 in the first working region Z1 and places the workpiece W in the second working region Z2 on the second conveyor 5. The first conveyor 3, the second conveyor 5, the host controller 11, and the like are configured similarly to those according to the first embodiment and will not be described repeatedly.

### 2-2. CONFIGURATION OF PARALLEL LINK ROBOT

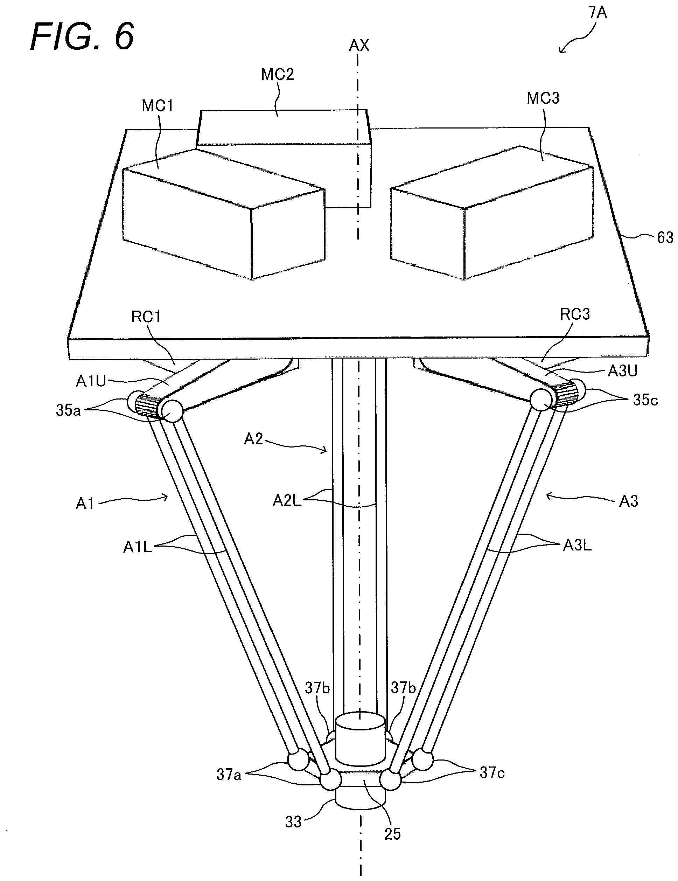

The parallel link robot 7A according to the present embodiment will be described next in terms of an exemplary configuration thereof with reference to FIG. 6 to FIG. 8.

As depicted in FIG. 6, the parallel link robot 7A includes the base 63, the movable portion 25, the three arms A1 to A3, and the three motors M1 to M3. Similarly to the first embodiment, the motors M1 to M3 are accommodated in the motor cases MC1 to MC3, respectively (see FIG. 4). FIG. 5 and FIG. 6 depict the motor cases MC1 to MC3.

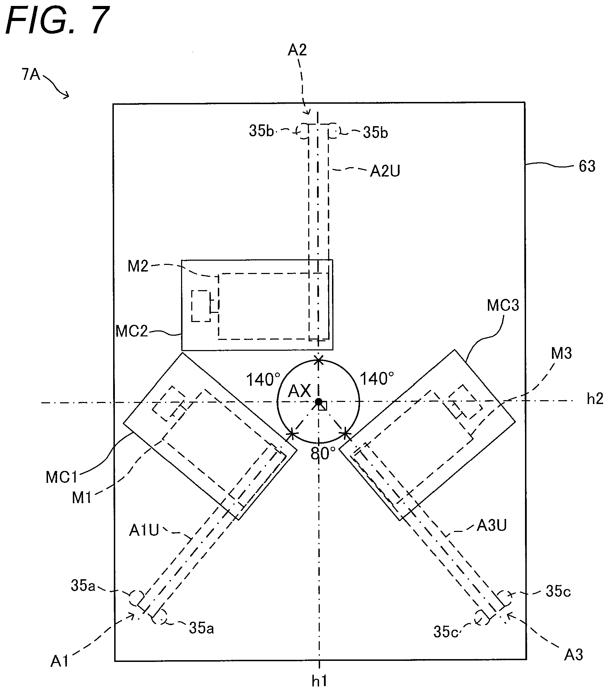

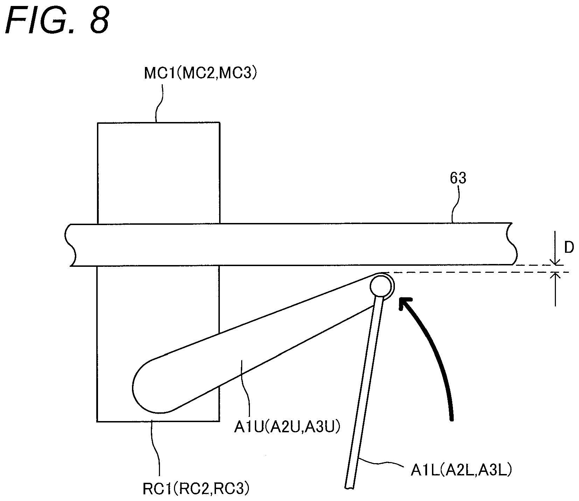

The three motors M1 to M3 (the motor cases MC1 to MC3) are provided at the top of the base 63 and are configured to drive the arms A1 to A3, respectively. As depicted in FIG. 7, the base 63 has the substantially rectangular shape as exemplified herein, and has a plane sized to cover the upper arm portions A1U to A3U extending horizontally in the arms A1 to A3. As depicted in FIG. 8, operation of the arms A1 to A3 is controlled by the second operation control unit 65 such that the tip of each of the upper arm portions A1U to A3U swung maximumly is far from the top board 61 by predetermined distance D (so as to prevent the tip from coming into contact with the top board 61). The base 63 should not be limited to the rectangular shape and may alternatively have a square shape, a hexagonal shape, a trapezoidal shape, or the like.

As depicted in FIG. 7, similarly to the first embodiment, the arms A1 to A3 are arranged such that the upper arm portions A1U to A3U form circumferential angles around the center axis AX, including an angle less than 120 degrees and remaining two angles equal to each other. For example, the arms A1 and A2 form an angle having 140 degrees, the arms A2 and A3 form an angle also having 140 degrees, and the arms A3 and A1 form an angle having 80 degrees.

The arms A1 to A3 and the power transmission mechanisms T1 to T3 configured to transmit motive power of the motors M1 to M3 to the speed reducers R1 to R3, respectively, are configured similarly to those according to the first embodiment and will not be described repeatedly (see FIG. 4).

### 2-3. EFFECTS OF SECOND EMBODIMENT

As described above, the parallel link robot system 1A further includes the top board 61 provided above the first working region Z1 and the second working region Z2 and fixedly provided thereon with the three motors M1 to M3 configured to drive the three arms A1 to A3 in each of the parallel link robots 7A. The top board 61 also serves as the bases 63 of the parallel link robots 7A.

The top board 61 according to the present embodiment partitions into a lower space for execution of the picking and placing work and an upper space provided with the motors M1 to M3 (the motor cases MC1 to MC3). This configuration inhibits dirt or dust in the upper space of the top board 61 from falling into the lower space to adhere to or mix with the workpiece W, for improvement in hygienic environment of the working regions for the picking and placing work. The top board 61 also serves as the bases 63 of the parallel link robots 7A, for inhibition of increase in the number of parts.

Particularly, the top board 61 according to the present embodiment is divided correspondingly to each of the parallel link robots 7A, and the bases 63 thus divided each have the substantially rectangular shape with the long side extending in the extension direction h1 of the arm A2 and the short side extending in the width direction h2 substantially perpendicular to the extension direction h1. When the plurality of parallel link robots 7A is arrayed in the width direction h2 to be reduced in width, the bases 63 each having the rectangular shape are combined to have the long sides positioned adjacent to each other so as to be easily directed and positioned for improved workability.

Particularly, the parallel link robot system 1A according to the present embodiment further includes the second operation control unit 65 configured to control operation of the three arms A1 to A3 such that the tips of the upper arm portions A1U to A3U do not come into contact with the top board 61. The top board 61 thus needs no cut-away portion (e.g. the cut-away portion 27, 29, or 31 according to the first embodiment) for securement of the movable range of each of the upper arm portions A1U to A3U, for improved partitioning into the upper space and the lower space by the top board 61. This configuration achieves further improvement in hygienic environment of the working regions for the picking and placing work.

### 3. MODIFICATION EXAMPLES

Modification examples thus achieved will be described below.

For example, described above is the parallel link robot 7 (7A) including the arms A1 to A3 provided such that the arms A1 and A3 form the circumferential angle having 80 degrees around the center axis AX and the arms A1 and A2 and the arms A2 and A3 each form the circumferential angle having 140 degrees. In order to achieve both improvement in maintainability and increase in movable range by arranging the motors M1 to M3 and the speed reducers R1 to R3 separately above and below the base 23 (63), the arms A1 to A3 do not necessary form the angles as mentioned above and may alternatively have equal angles (120 degrees) or the like.

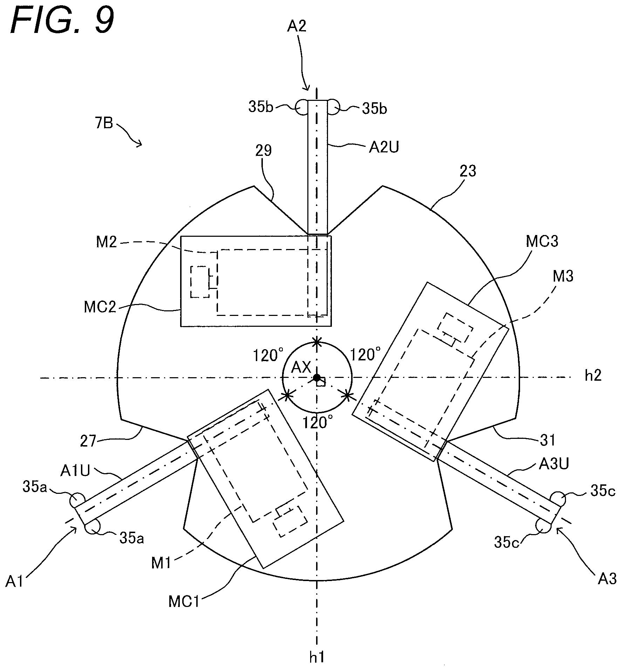

FIG. 9 depicts an exemplary configuration of a parallel link robot 7B in this case. In the parallel link robot 7B depicted in FIG. 9, the arms A1 to A3 are arranged such that the upper arm portions A1U to A3U form circumferential angles each having 120 degrees around the center axis AX. The base 23 is provided with the cut-away portions 27, 29, and 31 positioned at equal intervals correspondingly to the arms A1 to A3. As exemplified herein, the motors M1 to M3 (the motor cases MC1 to MC3) are arranged to be directed identically at the first circumferential ends of the arms A1 to A3, respectively. The elements other than the above are configured similarly to corresponding portions according to the first embodiment. A parallel link robot system including the parallel link robot 7B according to the present modification example can also achieve both improvement in maintainability and increase in movable range.

Similarly to the above, when the top board 61 (the base 63) is provided to partition into the lower space for the picking and placing work and the upper space provided with the motors M1 to M3 (the motor cases MC1 to MC3) in order to inhibit dirt or dust in the upper space of the top board 61 from falling into the lower space to adhere to or mix with the workpiece W, the arms A1 to A3 do not necessary form the angles mentioned above (80 degrees, 140 degrees, and 140 degrees) and may alternatively have equal angles (120 degrees) or the like.

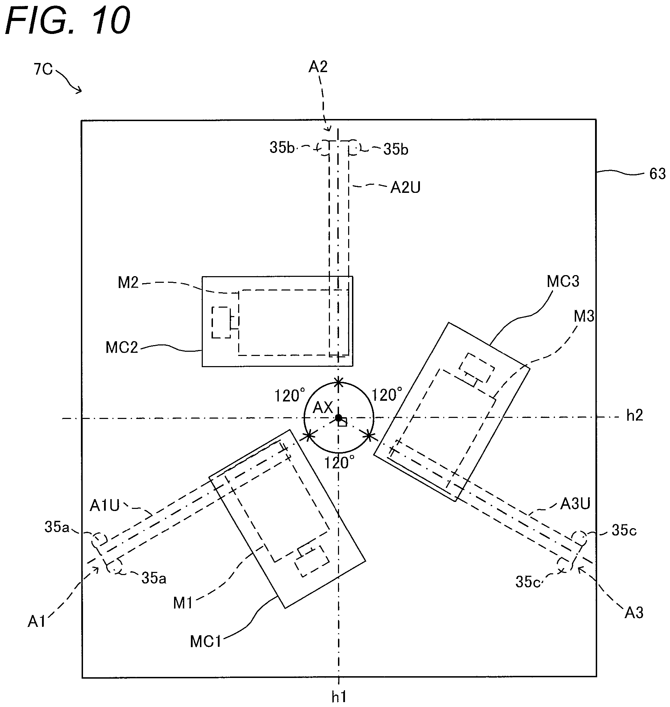

FIG. 10 depicts an exemplary configuration of a parallel link robot 7C in this case. In the parallel link robot 7C depicted in FIG. 10, the arms A1 to A3 are arranged such that the upper arm portions A1U to A3U form circumferential angles each having 120 degrees around the center axis AX. As exemplified herein, the motors M1 to M3 (the motor cases MC1 to MC3) are arranged to be directed identically at the first circumferential ends of the arms A1 to A3, respectively. The elements other than the above are configured similarly to corresponding portions according to the second embodiment. A parallel link robot system including the parallel link robot 7C according to the present modification example can also inhibit dirt or dust in the upper space of the top board 61 (the base 63) from falling into the lower space to adhere to or mix with the workpiece W, for improvement in hygienic environment of the working regions for the picking and placing work.

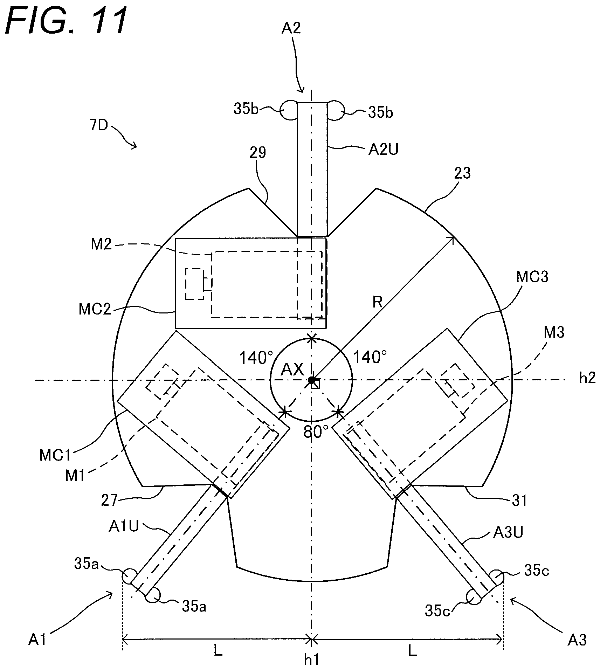

According to a different modification example, the arm A2 itself may exemplarily be configured to be higher in rigidity than each of the two arms A1 and A3. FIG. 11 depicts an exemplary configuration of a parallel link robot 7D in this case. As depicted in FIG. 11, the upper arm portion A2U in the arm A2 is exemplarily made thicker than the upper arm portions A1U and A3U in the arms A1 and A3 to have higher rigidity. Similarly, though not depicted, the lower arm portions A2L in the arm A2 are exemplarily made thicker than the lower arm portions A1L and A3L in the arms A1 and A3 to have higher rigidity. The rigidity may be improved not by the thickness but with use of a different material. Furthermore, the arm A2 has joints (the spherical bearings 35b and 37b) exemplarily constituted by bearings having higher rigidity, so as to be higher in rigidity than joints (the spherical bearings 35a and 37a and the spherical bearings 35c and 37c) of the arms A1 and A3. The motor M2 configured to drive the arm A2 having higher rigidity may have larger output (torque or rotational speed) than the remaining motors M1 and M3. Such a configuration reduces differences in balance of rigidity among the three arms A1 to A3, for more stable execution of the placing work.

### 4. EXEMPLARY HARDWARE CONFIGURATION OF CONTROLLER

Described next with reference to FIG. 12 is an exemplary hardware configuration of the robot controller 13 or 13A achieving processing by the first operation control unit 21, the second operation control unit 65, or the like implemented by the programs executed by the CPU 901 mentioned above. FIG. 12 excludes, where appropriate, a configuration relevant to a function of supplying the motors M1 to M3 with drive electric power. The host controller 11 may alternatively have a similar hardware configuration.

As exemplarily depicted in FIG. 12, the robot controller 13 or 13A includes the CPU 901, a ROM 903, a RAM 905, a dedicated integrated circuit 907 such as an ASIC or an FPGA configured for specific application, an input device 913, an output device 915, a recording device 917, a drive 919, a connection port 921, and a communication device 923. These elements are connected to each other via a bus 909 or an input-output interface 911 so as to achieve mutual signal transmission.

The programs can be stored in the ROM 903, the RAM 905, the recording device 917 constituted by a hard dick, or the like.

The programs can alternatively be stored temporarily or nontemporarily (permanently) in a removable storage medium 925 such as a magnetic disk like a flexible disk, an optical disk like any type of a CD, an MO disk, or a DVD, or a semiconductor memory. The storage medium 925 may be provided as so-called package software. In this case, the programs stored in the storage medium 925 may be read by the drive 919 and be stored in the recording device 917 via the input-output interface 911, the bus 909, or the like.

The programs can still alternatively be stored in any download site, any other computer, any other recording device (not depicted), or the like. The programs are transferred via a network NW such as the LAN or the Internet, to be received by the communication device 923. The programs received by the communication device 923 may be stored in the recording device 917 via the input-output interface 911, the bus 909, or the like.

The programs can further alternatively be stored in an appropriate external connection device 927. In this case, the programs may be transferred via the appropriate connection port 921 and be stored in the recording device 917 via the input-output interface 911, the bus 909, or the like.

The CPU 901 executes various processing in accordance with the programs stored in the recording device 917 to achieve the processing by the first operation control unit 21, the second operation control unit 65, or the like. In this case, the CPU 901 may execute the processing by directly reading the programs out of the recording device 917, or may temporarily download the programs on the RAM 905 to execute the processing. Furthermore, in a case where the programs are received via the communication device 923, the drive 919, or the connection port 921, the CPU 901 may directly execute the received programs without storing the programs in the recording device 917.

The CPU 901 may execute the various processing as necessary in accordance with a signal or information inputted with use of the input device 913 like a mouse, a keyboard, or a microphone (not depicted).

The CPU 901 may output a result of the executed processing from the output device 915 like a display device or an audio output device, may transmit the processing result as necessary via the communication device 923 or the connection port 921, or may store the processing result in the recording device 917 or the storage medium 925.

The above description may include expressions like "perpendicular", "parallel", and "planar", which do not have strict meanings. Specifically, the expressions "perpendicular", "parallel", and "planar" may each include a tolerance or an error in design and manufacture, to mean "substantially perpendicular", "substantially parallel", and "substantially planar", respectively.

The above description may include expressions like "identical", "same", "equal", and "different", which do not have strict meanings. Specifically, the expressions "identical", "same", "equal", and "different" may each include a tolerance or an error in design and manufacture, to mean "substantially identical", " substantially same", "substantially equal", and "substantially different", respectively.

Other than the above, techniques according to the above embodiments and the modification examples can be combined where appropriate.

## Claims

1. A parallel link robot system (1) comprising:
at least one parallel link robot (7) configured to pick a workpiece (W) in a first working region (Z1) and place the workpiece (W) in a second working region (Z2), the at least one parallel link robot (7) comprising:
a base (23) having an axis (AX);
a movable portion (25) movable relatively to the base (23) along the axis (AX) so as to pick and place the workpiece (W);
first, second and third arms (A1, A2, A3) provided to project outwardly in a radial direction with respect to the axis (AX) and arranged around the axis (AX) to form a first angle between the first arm (A1) and the second arm (A2), a second angle between the second arm (A2) and the third arm (A3), and a third angle between the third arm (A3) and the first arm (A1), each of the first, second and third arms (A1, A2, A3) connecting the base (23) and the movable portion (25) to move the movable portion (25) along the axis (AX);
the third angle being less than 120 degrees, the first angle and the second angle being equal to each other; and
the first arm (A1) and the third arm (A3) being positioned on a side of the first working region (Z1) with respect to the axis (AX), the second arm (A2) being positioned on a side of the second working region (Z2) with respect to the axis (AX);
**characterized in that**
the at least one parallel link robot (7) includes three motors (M1, M2, M3) located at the top of the base; and
the at least one parallel link robot (7) includes a belt (53) which is inserted through an opening (51) provided in the base (23) and which is configured to transmit motive power of the motors (M1, M2, M3) to the speed reducers (R1, R2, R3), respectively.

2. The parallel link robot system (1) according to claim 1, wherein the at least one parallel link robot (7) includes first and second parallel link robots (7A) which are provided such that the second arm (A2) of the first parallel link robot (7A) and the second arm (A2) of the second parallel link robot (7A) are parallel.

3. The parallel link robot system (1) according to claim 1 or 2, further comprising:
a first conveying device (3) configured to convey the workpiece (W) along a course including the first working region (Z1), wherein the at least one parallel link robot (7) is provided such that the first and third arms (A1, A3) are positioned on a side of the first conveying device (3) with respect to the axis (AX).

4. The parallel link robot system (1) according to claim 3, further comprising:
a second conveying device (5) configured to convey the workpiece (W) along a course including the second working region (Z2), wherein the at least one parallel link robot (7) is provided such that the second arm (A2) is positioned on a side of the second conveying device (5) with respect to the axis (AX).

5. The parallel link robot system (1) according to claim 3 or 4, further comprising:
a camera (9) configured to capture, at a position upstream of the first working region (Z1), an image of the workpiece (W) which is conveyed by the first conveying device (3);
an image processor (19) configured to process the image obtained by the camera (9); and
a first operation controller (21) configured to control the at least one parallel link robot (7) in accordance with a result of the image processor (19).

6. The parallel link robot system (1) according to any one of claims 1 to 5, wherein the at least one parallel link robot (7) comprises
three motors (M1, M2, M3) provided at a top of the base (23) and configured to drive the first, second, and third arms (A1, A2, A3) respectively, and
three speed reducers (R1, R2, R3) provided at a bottom of the base (23) and configured to reduce speed of motive power of the three motors (M1, M2, M3) respectively.

7. The parallel link robot system (1) according to any one of claims 1 to 6, further comprising:
a top board (61) provided above the first working region (Z1) and the second working region (Z2) and fixedly provided thereon with three motors (M1, M2, M3) configured to respectively drive the first, second, and third arms (A1, A2, A3) in each of the parallel link robots (7), wherein the top board (61) serves as the base (23) of each of the parallel link robots.

8. The parallel link robot system (1) according to claim 7, wherein
the top board (61) is divided correspondingly to each of the parallel link robots (7), and has a substantially rectangular shape with a long side extending in an extension direction (h1) of the second arm (A2) and a short side extending in a direction substantially perpendicularly to the extension direction (h1).

9. The parallel link robot system (1) according to claim 7 or 8, further comprising:
a second operation controller (65) configured to control operation of the first, second, and third arms (A1, A2, A3) such that tips of the first, second, and third arms (A1, A2, A3) do not come into contact with the top board (61).

10. The parallel link robot system according to any one of claims 1 to 9, wherein the second arm (A2) has rigidity higher than rigidity of the first and third arms (A1, A3).

## Patentansprüche

1. Parallel-Verbindung-Robotersystem (1), aufweisend:
mindestens einen Parallel-Verbindung-Roboter (7), welcher so konfiguriert ist, dass er ein Werkstück (W) in einem ersten Arbeitsbereich (Z1) aufnimmt und das Werkstück (W) in einem zweiten Arbeitsbereich (Z2) platziert, wobei der mindestens eine Parallel-Verbindung-Roboter (7) aufweist:
eine Basis (23), welche eine Achse (AX) hat;
einen bewegbaren Abschnitt (25), welcher relativ zu der Basis (23) entlang von der Achse (AX) bewegbar ist, um das Werkstück (W) aufzunehmen und zu platzieren;
einen ersten Arm (A1), einen zweiten Arm (A2), und einen dritten Arm (A3), welche so bereitgestellt sind, dass sie in einer radialen Richtung in Bezug auf die Achse (AX) nach außen hin hervorstehen, und um die Achse (AX) herum angeordnet sind, um einen ersten Winkel zwischen dem ersten Arm (A1) und dem zweiten Arm (A2), einen zweiten Winkel zwischen dem zweiten Arm (A2) und dem dritten Arm (A3), und einen dritten Winkel zwischen dem dritten Arm (A3) und dem ersten Arm (A1) zu bilden, wobei jeder von dem ersten Arm (A1), dem zweiten Arm (A2) und dem dritten Arm (A3) die Basis (23) und den bewegbaren Abschnitt (25) verbindet, um den bewegbaren Abschnitt (25) entlang von der Achse (AX) zu bewegen;
wobei der dritte Winkel kleiner als 120 Grad ist, wobei der erste Winkel und der zweite Winkel einander gleichen;
und
wobei der erste Arm (A1) und der dritte Arm (A3) an einer Seite von dem ersten Arbeitsbereich (Z1) in Bezug auf die Achse (AX) positioniert sind, wobei der zweite Arm (A2) an einer Seite von dem zweiten Arbeitsbereich (Z2) in Bezug auf die Achse (AX) positioniert ist;
**dadurch gekennzeichnet, dass**:
der mindestens eine Parallel-Verbindung-Roboter (7) drei Motoren (M1, M2, M3) aufweist, welche an der oberen Seite von der Basis angeordnet sind; und
der mindestens eine Parallel-Verbindung-Roboter (7) einen Riemen (53) aufweist, welcher durch eine Öffnung (51) hindurch, welche in der Basis (23) bereitgestellt ist, eingesetzt ist und welcher so konfiguriert ist, dass er in jeweils zugeordneter Weise die Antriebskraft der Motoren (M1, M2, M3) an die
Geschwindigkeitsreduzierungsvorrichtungen (R1, R2, R3) überträgt.

2. Parallel-Verbindung-Robotersystem (1) gemäß Anspruch 1, wobei der mindestens eine Parallel-Verbindung-Roboter (7) einen ersten Parallel-Verbindung-Roboter (7A) und einen zweiten Parallel-Verbindung-Roboter (7A) aufweist, welche derart bereitgestellt sind, dass der zweite Arm (A2) des ersten Parallel-Verbindung-Roboters (7A) und der zweite Arm (A2) des zweiten Parallel-Verbindung-Roboters (7A) parallel sind.

3. Parallel-Verbindung-Robotersystem (1) gemäß Anspruch 1 oder 2, ferner aufweisend:
eine erste Beförderungsvorrichtung (3), welche so konfiguriert ist, dass sie das Werkstück (W) entlang von einem Kursverlauf befördert, welcher den ersten Arbeitsbereich (Z1) aufweist, wobei der mindestens eine Parallel-Verbindung-Roboter (7) derart bereitgestellt ist, dass der erste Arm (A1) und der dritte Arm (A3) an einer Seite von der ersten Beförderungsvorrichtung (3) in Bezug auf die Achse (AX) positioniert sind.

4. Parallel-Verbindung-Robotersystem (1) gemäß Anspruch 3, ferner aufweisend:
eine zweite Beförderungsvorrichtung (5), welche so konfiguriert ist, dass sie das Werkstück (W) entlang von einem Kursverlauf befördert, welcher den zweiten Arbeitsbereich (Z2) aufweist, wobei der mindestens eine Parallel-Verbindung-Roboter (7) derart bereitgestellt wird, dass der zweite Arm (A2) an einer Seite von der zweiten Beförderungsvorrichtung (5) in Bezug auf die Achse (AX) positioniert ist.

5. Parallel-Verbindung-Robotersystem (1) gemäß Anspruch 3 oder 4, ferner aufweisend:
eine Kamera (9), welche so konfiguriert ist, dass sie an einer Position stromaufwärts von dem ersten Arbeitsbereich (Z1) ein Bild von dem Werkstück (W) aufnimmt, welches mittels der ersten Beförderungsvorrichtung (3) befördert wird;
eine Bildverarbeitungsvorrichtung (19), welche so konfiguriert ist, dass sie das mittels der Kamera (9) erlangte Bild verarbeitet; und
eine erste Betriebssteuervorrichtung (21), welche so konfiguriert ist, dass sie den mindestens einen Parallel-Verbindung-Roboter (7) gemäß einem Ergebnis der Bildverarbeitungsvorrichtung (19) steuert.

6. Parallel-Verbindung-Robotersystem (1) gemäß einem der Ansprüche 1 bis 5, wobei der mindestens eine Parallel-Verbindung-Roboter (7) aufweist:
drei Motoren (M1, M2, M3), welche an einer oberen Seite von der Basis (23) bereitgestellt sind und so konfiguriert sind, dass sie den ersten Arm (1), den zweiten Arm (2) und den dritten Arm (A3) in jeweils zugeordneter Weise antreiben, und
drei Geschwindigkeitsreduzierungsvorrichtungen (R1, R2, R3), welche an einer unteren Seite von der Basis (23) bereitgestellt sind und so konfiguriert sind, dass sie in jeweils zugeordneter Weise eine Antriebskraftgeschwindigkeit der drei Motoren (M1, M2, M3) reduzieren.

7. Parallel-Verbindung-Robotersystem (1) gemäß einem der Ansprüche 1 bis 6, ferner aufweisend:
eine obere Platte (61), welche oberhalb von dem ersten Arbeitsbereich (Z1) und dem zweiten Arbeitsbereich (Z2) bereitgestellt ist und an welcher drei Motoren (M1, M2, M3) in fixierter Weise bereitgestellt sind, welche so konfiguriert sind, dass sie in jeweils zugeordneter Weise den ersten Arm (A1), den zweiten Arm (A2) und den dritten Arm (A3) in jedem von den Parallel-Verbindung-Robotern (7) antreiben, wobei die obere Platte (61) als die Basis (23) für jeden von den Parallel-Verbindung-Robotern dient.

8. Parallel-Verbindung-Robotersystem (1) gemäß Anspruch 7, wobei:
die obere Platte (61) korrespondierend zu jedem von den Parallel-Verbindung-Robotern (7) geteilt ist und eine im wesentlichen rechteckige Form hat mit einer langen Seite, welche sich in einer Erstreckungsrichtung (h1) des zweiten Arms (A2) erstreckt, und einer kurzen Seite, welche sich in einer Richtung, welche im Wesentlichen senkrecht zu der Erstreckungsrichtung (h1) ist, erstreckt.

9. Parallel-Verbindung-Robotersystem (1) gemäß Anspruch 7 oder 8, ferner aufweisend:
eine zweite Betriebssteuervorrichtung (65), welche so konfiguriert ist, dass sie den Betrieb des ersten Arms (A1), des zweiten Arms (A2) und des dritten Arms (A3) derart steuert, dass die Spitzen des ersten Arms (A1), des zweiten Arms (A2) und des dritten Arms (A3) nicht mit der oberen Platte (61) in Kontakt kommen.

10. Parallel-Verbindung-Robotersystem gemäß einem der Ansprüche 1 bis 9, wobei der zweite Arm (A2) eine höhere Steifigkeit hat als der erste Arm (A1) und der dritte Arm (A3).

## Revendications

1. Système de robot à liaisons parallèles (1), comprenant :
au moins un robot à liaisons parallèles (7) configuré pour saisir une pièce à usiner (W) dans une première région de travail (Z1) et placer la pièce à usiner (W) dans une deuxième région de travail (Z2), ledit au moins un robot à liaisons parallèles (7) comprenant :
une base (23) ayant un axe (AX) ;
une partie mobile (25) mobile par rapport à la base (23) le long de l'axe (AX) de manière à saisir et à placer la pièce à usiner (W) ;
des premier, deuxième et troisième bras (A1, A2, A3) prévus pour faire saillie vers l'extérieur dans une direction radiale par rapport à l'axe (AX) et disposés autour de l'axe (AX) de manière à former un premier angle entre le premier bras (A1) et le deuxième bras (A2), un deuxième angle entre le deuxième bras (A2) et le troisième bras (A3), et un troisième angle entre le troisième bras (A3) et le premier bras (A1), chacun des premier, deuxième et troisième bras (A1, A2, A3) reliant la base (23) et la partie mobile (25) pour déplacer la partie mobile (25) le long de l'axe (AX) ;
le troisième angle étant inférieur à 120 degrés, le premier angle et le deuxième angle étant égaux l'un à l'autre ; et
le premier bras (A1) et le troisième bras (A3) étant positionnés sur un côté de la première région de travail (Z1) par rapport à l'axe (AX), le deuxième bras (A2) étant positionné sur un côté de la deuxième région de travail (Z2) par rapport à l'axe (AX) ;
**caractérisé en ce que**
ledit au moins un robot à liaisons parallèles (7) comprend trois moteurs (M1, M2, M3) situés en haut de la base ; et
ledit au moins un robot à liaisons parallèles (7) comprend une courroie (53) qui est insérée à travers une ouverture (51) prévue dans la base (23) et qui est configurée pour transmettre la puissance motrice des moteurs (M1, M2, M3) aux réducteurs de vitesse (R1, R2, R3), respectivement.

2. Système de robot à liaisons parallèles (1) selon la revendication 1, dans lequel ledit au moins un robot à liaisons parallèles (7) comprend un premier et un deuxième robot à liaisons parallèles (7A) qui sont prévus de telle sorte que le deuxième bras (A2) du premier robot à liaisons parallèles (7A) et le deuxième bras (A2) du deuxième robot à liaisons parallèles (7A) sont parallèles.

3. Système de robot à liaisons parallèles (1) selon la revendication 1 ou 2, comprenant en outre :
un premier dispositif de transport (3) configuré pour transporter la pièce à usiner (W) le long d'un parcours comprenant la première région de travail (Z1), dans lequel ledit au moins un robot à liaisons parallèles (7) est prévu de telle sorte que les premier et troisième bras (A1, A3) sont positionnés sur un côté du premier dispositif de transport (3) par rapport à l'axe (AX).

4. Système de robot à liaisons parallèles (1) selon la revendication 3, comprenant en outre :
un deuxième dispositif de transport (5) configuré pour transporter la pièce à usiner (W) le long d'un parcours comprenant la deuxième région de travail (Z2), dans lequel ledit au moins un robot à liaisons parallèles (7) est prévu de telle sorte que le deuxième bras (A2) est positionné sur un côté du deuxième dispositif de transport (5) par rapport à l'axe (AX).

5. Système de robot à liaisons parallèles (1) selon la revendication 3 ou 4, comprenant en outre :
une caméra (9) configurée pour capturer, dans une position en amont de la première région de travail (Z1), une image de la pièce à usiner (W) qui est transportée par le premier dispositif de transport (3) ;
un processeur d'image (19) configuré pour traiter l'image obtenue par la caméra (9) ; et
un premier contrôleur de fonctionnement (21) configuré pour contrôler ledit au moins un robot à liaisons parallèles (7) en fonction d'un résultat du processeur d'image (19).

6. Système de robot à liaisons parallèles (1) selon l'une quelconque des revendications 1 à 5, dans lequel ledit au moins un robot à liaisons parallèles (7) comprend :
trois moteurs (M1, M2, M3) prévus sur un haut de la base (23) et configurés pour entraîner respectivement les premier, deuxième et troisième bras (A1, A2, A3), et
trois réducteurs de vitesse (R1, R2, R3) prévus sur un bas de la base (23) et configurés pour réduire respectivement la vitesse de la puissance motrice des trois moteurs (M1, M2, M3).

7. Système de robot à liaisons parallèles (1) selon l'une quelconque des revendications 1 à 6, comprenant en outre :
une plaque supérieure (61) prévue au-dessus de la première région de travail (Z1) et de la deuxième région de travail (Z2) et sur laquelle sont fixés trois moteurs (M1, M2, M3) configurés pour entraîner respectivement les premier, deuxième et troisième bras (A1, A2, A3) dans chacun des robots à liaisons parallèles (7), la plaque supérieure (61) servant de base (23) à chacun des robots à liaisons parallèles.

8. Système de robot à liaisons parallèles (1) selon la revendication 7, dans lequel
la plaque supérieure (61) est divisée en fonction de chacun des robots à liaisons parallèles (7), et a une forme sensiblement rectangulaire avec un côté long s'étendant dans une direction d'extension (h1) du deuxième bras (A2) et un côté court s'étendant dans une direction sensiblement perpendiculaire à la direction d'extension (h1).

9. Système de robot à liaisons parallèles (1) selon la revendication 7 ou 8, comprenant en outre :
un deuxième contrôleur de fonctionnement (65) configuré pour contrôler le fonctionnement des premier, deuxième et troisième bras (A1, A2, A3) de telle sorte que des bouts des premier, deuxième et troisième bras (A1, A2, A3) n'entrent pas en contact avec la plaque supérieure (61).

10. Système de robot à liaisons parallèles selon l'une quelconque des revendications 1 à 9, dans lequel le deuxième bras (A2) a une rigidité supérieure à la rigidité des premier et troisième bras (A1, A3).
